# EUROPÄISCHE PATENTSCHRIFT

(11) **EP 2 886 293 B1**
(45) Veröffentlichungstag und Bekanntmachung des Hinweises auf die Patenterteilung: **11.07.2018**
(21) Anmeldenummer: 13198996.4
(22) Anmeldetag: 20.12.2013
(51) Int. Cl.: B29C 47/08, B29C 47/90

(54) **Kalibriereinsatz**
Calibrator insert
Insert de calibrage

(43) Veröffentlichungstag der Anmeldung: 24.06.2015
(73) Patentinhaber: heimic solution gmbh, 4563 Micheldorf (AT)
(72) Erfinder: Heider, Michael, 4563 Micheldorf (AT)
(74) Vertreter: Caspary, Karsten

(56) Entgegenhaltungen:
- EP-A1- 1 872 927
- AT-A4- 509 047
- CN-Y- 201 109 180
- DE-A1- 10 222 922
- DE-C1- 19 806 202

## Beschreibung

Die vorliegende Erfindung betrifft einen Kalibriereinsatz für eine Kalibrierblende, die in einem Kalibrierwerkzeug zur Herstellung von Extrusionsprofilen eingesetzt wird. Der Kalibriereinsatz ist dazu vorgesehen, in einer Nut der Kalibierblende aufgenommen und formschlüssig gehalten zu werden.
Kunststoffprofile werden üblicherweise in Extrusionsanlagen hergestellt, die Nasskalibrierwerkzeuge verwenden. Diese Nasskalibrierwerkzeuge sind mit Wasser gefüllte Wannen mit einer Mehrzahl von Kalibrierblenden, durch die das Profil hindurchgeführt wird. Besonders kritisch bei der Kalibrierung sind konkave Abschnitte des Profils, wie etwa Dichtungsnuten. Um diese Abschnitte präzise kalibrieren zu können, und um ausreichend lange Standzeiten der Werkzeuge gewährleisten zu können, ist es dabei üblich, in die Kalibrierblenden Kalibriereinsätze einzusetzen.
Diese Kalibriereinsätze springen in die Öffnung der Kalibierblenden vor und bilden die Nuten des Profils aus. Üblicherweise sind die Kalibriereinsätze aus Hartmetall hergestellt, und zur Befestigung ist es bekannt, diese kraftschlüssig in den Kalibrierblenden festzulegen. Um nicht die komplette Kalibrierblende auswechseln zu müssen, wenn die Kalibriereinsätze aufgrund der besonders hohen Belastung abgenutzt sind, sind die Kalibriereinsätze auswechselbar ausgebildet.
Aus der EP 2 360 004 A1 ist es bekannt, dass die Kalibriereinsätze einen Formgebungsabschnitt sowie einen Halteabschnitt aufweisen, wobei der Halteabschnitt aus zwei koaxial angeordneten konischen Bereichen besteht, die im mittleren Bereich ihre größte Querschnittserstreckung aufweisen. Dadurch kann der Kalibriereinsatz doppelseitig verwendet werden, wodurch die Möglichkeit besteht, nach einer gewissen Laufzeit, die an der stromaufwärtigen Seite des Kalibriereinsatzes einen bestimmten Verschleiß verursacht, den Kalibriereinsatz und damit den Formgebungsabschnitt umzudrehen und so insgesamt eine doppelt so lange Einsatzzeit zu erhalten. Die Druckschriften DE19806202 C1, DE10222922 A1, AT509047 A4, CN 201109180 Y und EP1872927 A1 offenbaren weitere Kalibriereinsätze.

Nachteilig an diesen Kalibriereinsätzen ist, dass ihre Herstellung aufwändig ist, da sie einstückig aus Hartmetall hergestellt werden, beispielsweise durch Drahterosion oder durch entsprechende Gieß- oder Sinterverfahren. Dies führt zu hohen Produktionskosten. Weiterhin nachteilig ist es, dass das Ersetzen des gesamten Hartmetalleinsatzes zeitaufwändig ist, weil zum Austauschen des Formgebungsabschnitts auch das Austauschen des Halteabschnitts erforderlich ist. Darüber hinaus sind die bekannten Kalibriereinsätze in ihren Abmessungen relativ groß, was zu Nachteilen bei der Handhabung und der vielseitigen Einsetzbarkeit führt. Sie sind wenig flexibel einzusetzen, d.h. dass bei Verschleiß lediglich des Formgebungsabschnitts der gesamte Kalibriereinsatz ausgetauscht werden muss.

Es ist daher die Aufgabe der vorliegenden Erfindung einen Kalibriereinsatz für eine Kalibrierblende bereitzustellen, der die oben genannten Nachteile zumindest teilweise überwindet, kostengünstig hergestellt werden kann, eine einfache und Platz sparende Konstruktion aufweist, flexibel verwendbar ist sowie die Standzeiten für den Werkzeug- oder Kalibriereinsatzwechsel der gesamten Extrusionsanlage minimiert.

Diese Aufgabe wird durch den Gegenstand mit den Merkmalen des Anspruchs 1 gelöst. Vorteilhafte Ausführungsformen und Weiterbildungen der Erfindungen sind in den Unteransprüchen beschrieben.

Erfindungsgemäß wird ein Kalibriereinsatz für eine Kalibrierblende für ein Kalibrierwerkzeug zur Herstellung von Extrusionsprofilen bereitgestellt, wobei der Kalibriereinsatz dazu vorgesehen ist, in einer Nut der Kalibrierblende aufgenommen und formschlüssig gehalten zu werden, wobei der Kalibriereinsatz derart zweiteilig ausgebildet ist, dass er ein Halteteil und ein von dem Halteteil getrennt hergestelltes Formgebungsteil umfasst. Durch die nicht mehr vorhandene Einstückigkeit bzw. fehlende integrale Ausbildung zwischen Halteteil und Formgebungsteil ergeben sich folgende Vorteile: zum einen ergibt sich dadurch eine einfachere Konstruktion, wodurch sich Kostenvorteile bei der Herstellung erzielen lassen. Zum anderen ermöglicht der zweiteilige Aufbau eine modulare Konstruktion, indem beispielsweise für ein und dasselbe Halteteil unterschiedliche Formgebungsteile bereitgestellt werden können. Da das Verschleißteil in aller Regel lediglich das Formgebungsteil ist, muss bei einem Wechsel nach Abnutzung des Formgebungsteils nur das Formgebungsteil ausgetauscht werden, und nicht der komplette Kalibriereinsatz. Darüber hinaus ergibt sich ein weiterer Vorteil dadurch, dass, wenn ein Formgebungsteil noch nicht abgenutzt ist, jedoch in einem unterschiedlich aufgebauten Halteteil eingesetzt werden soll, der Austausch des Halteteils möglich ist, um beispielsweise eine andere geometrische Anordnung des Formgebungsteils bezüglich des zu extrudierenden Werkstücks zu erzielen.

Bevorzugt weist das Halteteil ein erstes Material und das Formgebungsteil ein von dem ersten Material verschiedenes zweites Material auf. Dadurch können sich weitere Kostenvorteile ergeben, da üblicherweise nur das Formgebungsteil aus einem möglichst verschleißfesten Hartmetall ausgebildet sein muss. Das Halteteil ist nämlich in aller Regel nicht so stark durch den Kalibriervorgang beansprucht wie das Formgebungsteil. Es ist an dieser Stelle anzumerken, dass Halteteil und Formgebungsteil erfindungsgemäß nicht notwendigerweise aus unterschiedlichen Materialien ausgebildet sein müssen.
Mit besonderem Vorteil ist das Halteteil vollständig aus Kunststoff und das Formgebungsteil vollständig aus Metall ausgebildet. Dadurch erhält man eine stabile Kunststoffunterkonstruktion für den Kalibriereinsatz, wodurch sich eine erhebliche Kostenersparnis aufgrund der Materialauswahl ergibt. Das Formgebungsteil ist vorzugsweise aus Hartmetall, damit sich bezüglich der Funktion des Kalibriereinsatzes keine Nachteile ergeben, d. h. dass ein erfindungsgemäßer Kalibriereinsatz mit diesen Merkmalen dieselbe technische Funktion aufweist wie ein bekannter Kalibriereinsatz, beim dem Formgebungsteil und Halteteil einstückig aus Hartmetall gebildet sind.
Mit besonderem Vorteil stehen das Halteteil und das Formgebungsteil formschlüssig miteinander in Eingriff. Das Halteteil weist erfindgungsgemäß auf seiner Oberseite eine Ausnehmung auf, in der ein Fußabschnitt bzw. Verbindungsende des Formgebungsteils aufgenommen ist. Die Ausnehmung kann dabei langlochartig ausgebildet sein. Damit ergibt sich eine kompakte Konstruktion, bei der das Formgebungsteil in die Ausnehmung auf der Oberseite des Halteteils einsetzbar und gegebenenfalls in einem Presssitz damit fest verbunden ist, so dass sich der geforderte Formschluss ergibt. Mit geeigneten Hilfsmitteln ist die Verbindung zwischen Halteteil und Formgebungsteil wieder lösbar. Alternativ sind neben der langlochartigen Ausbildung der Ausnehmung auch andere Formen möglich, z. B. eine rechteckige, ellipsenförmige oder polygonale Ausnehmung. Durch die Abrundung der Enden des Langlochs wird das Einsetzen und Entnehmen des Formgebungsteils vereinfacht. Es wird an dieser Stelle angemerkt, dass die Ausnehmung des Halteteils bzw. des Fußabschnitts des Formgebungsteils nicht notwendigerweise achsensymmetrisch ausgebildet sein müssen. Dadurch ergeben sich jedoch Vorteile, denn bei einer symmetrischen Ausbildung kann das Formgebungsteil nach Verschleiß einfach umgedreht in die Ausnehmung eingesetzt werden.

Mit weiterem Vorteil ist die Ausnehmung gegenüber der Mittelposition quer zur Längsachse des Halteteils versetzt angeordnet. Dies ergänzt den modularen Aufbau des Kalibriereinsatzes weiter derart, dass ein und dasselbe Formgebungsteil in unterschiedliche Halteteile eingesetzt werden kann und dadurch das aufwändige Ersetzen eines vollständigen Kalibriereinsatzes (bei integral ausgebildetem Formgebungs- und Halteteil) überflüssig macht, denn es muss beispielsweise nur das Halteteil ausgetauscht werden, um eine andere geometrische Position des Formgebungsteils bzgl. des Extrudats einzustellen.

Weiterhin bevorzugt ist es, dass das Halteteil auf seiner Unterseite eine ebene Fläche sowie seitlich von der ebenen Fläche in Längsrichtung jeweils eine abgeschrägte Fläche aufweist.

Die ebene Fläche sowie die beiden abgeschrägten Flächen ermöglichen eine stabile und belastbare Führung des Halteteils in der dafür vorgesehenen Nut der Kalibrierblende.

Mit weiterem Vorteil ist das Halteteil bzgl. seiner Mittenebene, die zur Ebene der Kalibrierblende parallel ist, symmetrisch ausgebildet. Eine derartige symmetrische Ausbildung ermöglicht die vielseitige Verwendung von sowohl Halteteil als auch vom Formgebungsteil, da beide Teile in umgedrehter Einsatzrichtung verwendet werden können.

Mit besonderem Vorteil ist auf der Unterseite des Halteteils eine Nocke ausgebildet, deren Dicke von der Mitte zu den Längsseiten des Halteteils hin linear abnimmt. Dabei ist die Querschnittsfläche der Nocke vorteilhafterweise in Form eines Halbkreises, einer Halbellipse, eines Dreiecks, eines Halbpolygons oder eines Rechtecks ausgebildet. Durch diese Nocke wird das Halteteil in der dafür vorgesehenen Aufnahme der Kalibrierblende sowohl in Längsrichtung des Halteteils als auch quer dazu stabilisiert. Sie verstärkt den Presssitz und ermöglicht aber auch ein geführtes Einschieben und Herausnehmen des Halteteils. Die bevorzugte Form des Querschnitts der Nocke ist die eines Halbkreises, da damit eine besonders gute Führung erzielt werden kann.

Mit weiterem Vorteil weist das Formgebungsteil ein Verbindungsende und ein freies Ende auf, wobei das Verbindungsende formschlüssig mit der Ausnehmung auf der Oberseite des Halteteils verbunden ist. Um einen besonders guten Presssitz zwischen Formgebungsteil und Halteteil zu erreichen, sind die Dimensionen des Verbindungsendes des Formgebungsteils entsprechend mit den Dimensionen der Ausnehmung auf der Oberseite des Halteteils abgestimmt.
Weiterhin bevorzugt ist es, dass das freie Ende des Formgebungsteils eine schräge Fläche aufweist, die vorzugsweise zwischen 30° und 60°, noch weiter bevorzugt um 45° bezüglich der ebenen Oberseite des Halteteils geneigt ist. Durch die Schräge lassen sich die Anlageflächen des Formgebungsteils am Extrudat vergrößern. Da der Kalibriereinsatz insgesamt auch schräg in der Kalibrierblende eingesetzt sein kann, ergeben sich dadurch besonders vorteilhafte Platzverhältnisse bei der Kalibrierung, denn durch die Schrägstellung eines Kalibriereinsatzes können beispielsweise ein senkrecht eingesetzter Kalibriereinsatz und ein schräg eingesetzter Kalibriereinsatz direkt nebeneinander verwendet werden, um so beispielsweise eine besonders große Nut oder eine besondere Formung im Extrudat kalibrieren zu können.
Die Erfindung wird nachfolgend ausführlich unter Bezugnahme auf die in den Zeichnungen dargestellten Ausführungsbeispiele erläutert. Es zeigen:
- Fig. 1: eine perspektivische Darstellung zweier Kalibriereinsätze der vorliegenden Erfindung;
- Fig. 2: eine Seitenansicht der in Fig. 1 dargestellten Kalibriereinsätze;
- Fig. 3: eine Draufsicht auf den Kalibriereinsatz gemäß der in Fig. 1 rechts dargestellten Ausführungsform;
- Fig. 4: eine Ansicht auf die Unterseite eines Kalibriereinsatzes gemäß der vorliegenden Erfindung;
- Fig. 5: eine perspektivische Ansicht eines Halteteils gemäß der vorliegenden Erfindung;
- Fig. 6: eine Seitenansicht des Halteteils aus Fig. 5;
- Fig. 7: eine Seitenansicht der Länge nach des in den Fig. 5 und 6 abgebildeten Halteteils;
- Fig. 8: eine perspektivische Ansicht eines Formgebungsteils gemäß der vorliegenden Erfindung;
- Fig. 9: eine schematische Querschnittsansicht von zwei in eine Kalibrierblende eingesetzten erfindungsgemäßen Kalibriereinsätzen zusammen mit einem Extrudat; und
- Fig. 10-13: verschiedene Ausbildungen des Halteteils des erfindungsgemäßen Kalibriereinsatzes.

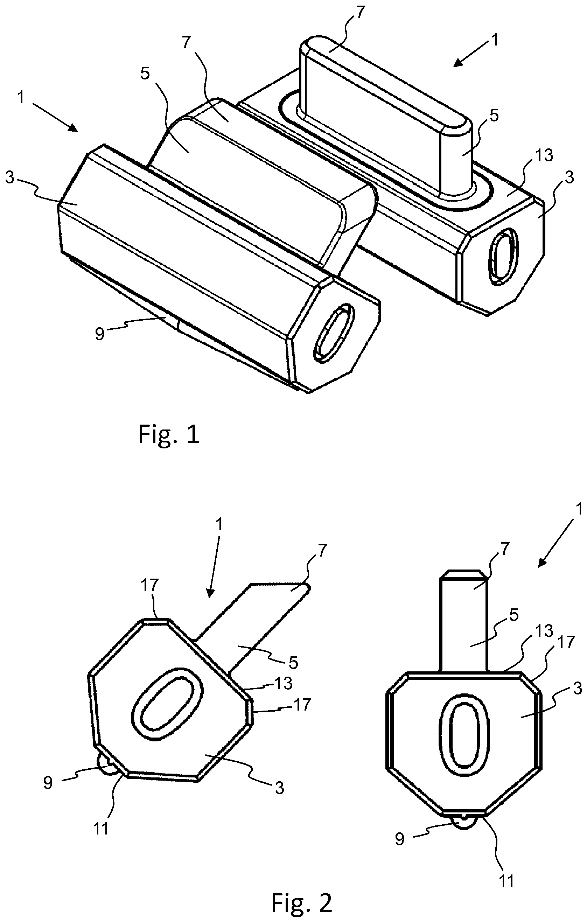

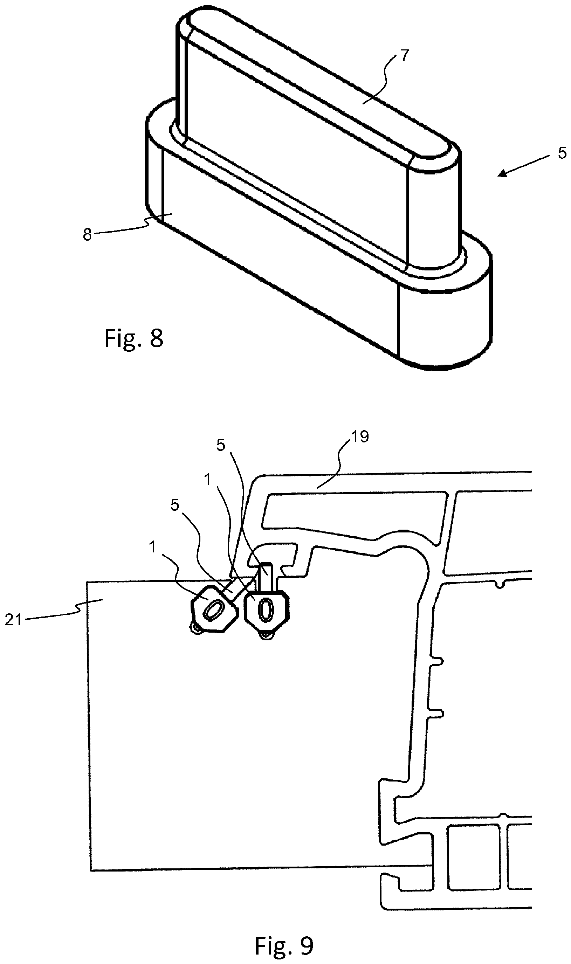

Fig. 1 zeigt eine perspektivische Darstellung zweier Kalibriereinsätze gemäß vorliegenden Erfindung. Die Kalibriereinsätze 1 weisen jeweils ein Halteteil 3 auf, das im Wesentlichen quaderförmig ausgebildet ist und auf seiner Oberseite ein Formgebungsteil 5 umfasst. Das Formgebungsteil 5 weist ein freies Ende 7 und ein Verbindungsende 8 auf, wobei das Verbindungsende 8 in eine auf der Oberseite 13 des Halteteils 3 vorgesehene Ausnehmung 15 formschlüssig eingesetzt ist. In der dargestellten Ausführungsform (beide Kalibriereinsätze 1) ist das Halteteil 3 aus einem thermoplastischen Kunststoff wie z. B. Hart-PVC ausgebildet. Es versteht sich, dass anstatt von Hart-PVC auch andere Kunststoffe verwendet werden können, z. B. Polypropylen (PP), Polyethylen (PE), Acrylnitril-Butadien-Styrol (ABS) oder ähnliche geeignete Kunststoffe. Das Formgebungsteil 5 ist bei beiden Kalibriereinsätzen, die in Fig. 1 dargestellt sind, aus Hartmetall ausgebildet. Das freie Ende 7 des in Fig. 1 links abgebildeten Kalibriereinsatzes 1 weist an seiner Oberseite eine um etwa 45° abgeschrägte Fläche auf, wohingegen das freie Ende 7 des in Fig. 1 rechts abgebildeten Kalibriereinsatzes 1 eine Oberfläche aufweist, die parallel zur Oberseite 13 des Halteteils 3 ist. Die unterschiedliche Ausbildung des freien Endes 7 der Formgebungsteile 5 hat Vorteile, wie weiter unten unter Bezugnahme auf Fig. 9 erläutert werden wird.

Fig. 2 zeigt eine Seitenansicht von vorne der in Fig. 1 dargestellten Kalibriereinsätze 1. Man erkennt, dass die Halteteile 3 an den Übergängen zwischen den längsseitigen Flächen und der Oberseite 13 um etwa 45° abgeschrägte Übergänge oder obere Kanten 17 aufweisen. Zur Unterseite hin sind diese Übergänge ebenfalls abgeschrägt, allerdings derart, dass die ebene Fläche an der Unterseite 11 wesentlich kleiner ist als auf der Oberseite. Dadurch ergibt sich auch, dass die Fläche der abgeschrägten Übergänge 17 größer ist als die Übergangsflächen zur Oberseite 13 des Halteteils 3. Auf der Unterseite 11 weist das Halteteil 3 eine in Längsrichtung angeordnete Nocke 9 auf, deren Dicke von der Mitte zu den Längsseiten des Halteteils 3 hin linear abnimmt. Diese lineare Abnahme der Dicke der Nocke 9 ist auch in dem in Fig. 1 links dargestellten Kalibriereinsatz 1 sichtbar. In Fig. 2 erkennt man bei beiden Kalibriereinsätzen 1 nur den (maximalen) Querschnitt der Nocke 9, der hier die Form eines Halbkreises aufweist. Die Nocke 9 dient im Wesentlichen dazu, das Halteteil 3 in der entsprechend ausgebildeten Nut der Kalibrierblende zu fixieren und das Einschieben und Herausziehen des Kalibriereinsatzes in die Kalibrierblende bzw. aus der Kalibrierblende heraus zu erleichtern. Die Nocke 9 gibt dabei eine Führung in Längsrichtung vor, innerhalb einer entsprechend ausgebildeten Nut in der Kalibrierblende. Die Nocke 9 verhindert ein Durchrutschen des Kalibriereinsatzes in Längsrichtung, also in Extrusionsrichtung. Die Nocke 9 klemmt bzw. zentriert beim Eindrücken das Halteteil genau auf die gewünschte Position.

In Fig. 2 ist ebenfalls erkennbar, dass die Formgebungsteile 5 jeweils symmetrisch zu einer Mittenebene in Längsrichtung des Kalibriereinsatzes 1 angeordnet sind. Daraus ergibt sich, dass bei einem Verdrehen um 180° (Umdrehen) des Kalibriereinsatzes 1 in der Kalibrierblende das Formgebungsteil 5 an identischer Position bezogen auf die Ausgangsposition angeordnet ist. Dies gilt selbstverständlich nur, wenn das Formgebungsteil 5 ebenfalls symmetrisch bezüglich der erwähnten Mittenebene ist, wie dies in der der rechten Darstellung in Fig. 2 der Fall ist.

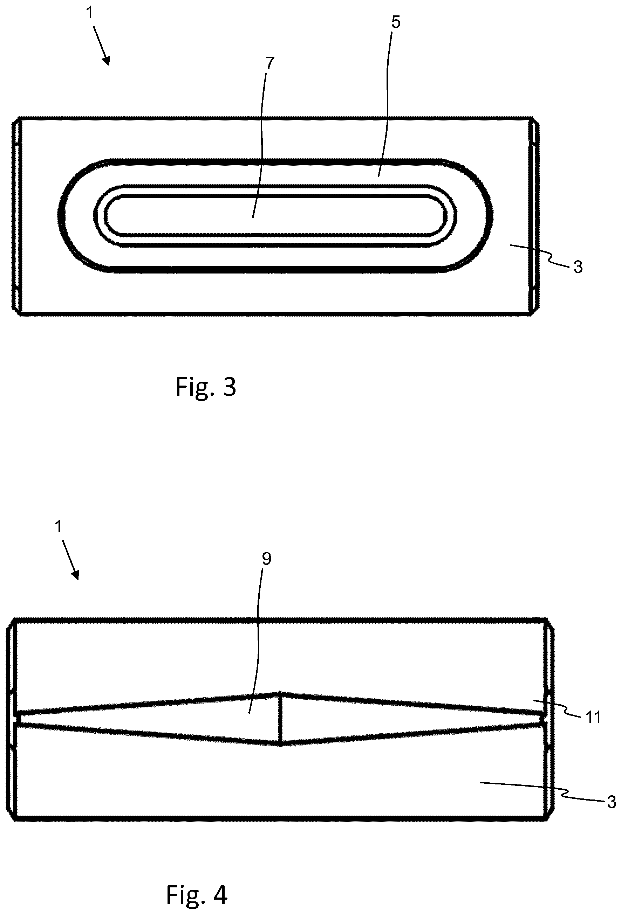

Fig. 3 zeigt eine Draufsicht auf den Kalibriereinsatz 1 gemäß der in Fig. 1 rechts dargestellten Ausführungsform. Man erkennt, dass die Oberseite 13 des Halteteils 3 eine langlochartige Ausnehmung 15 aufweist, in die das Formgebungsteil 5 formschlüssig eingesetzt ist. Das Formgebungsteil 5 wiederum weist ein freies Ende 7 auf, dessen Umfangsfläche ähnlich zu der Umfangsfläche des Fußabschnitts ausgebildet ist.

Fig. 4 zeigt eine schematische Ansicht auf die Unterseite 11 eines Kalibriereinsatzes 1 gemäß der vorliegenden Erfindung. Deutlich ist auf der Unterseite 11 die von der Mitte zu den Längsseiten des Halteteils 3 hin schmaler werdende Nocke 9 zu erkennen, deren Querschnitt wie aus Fig. 2 bekannt bevorzugt halbkreisförmig ist.

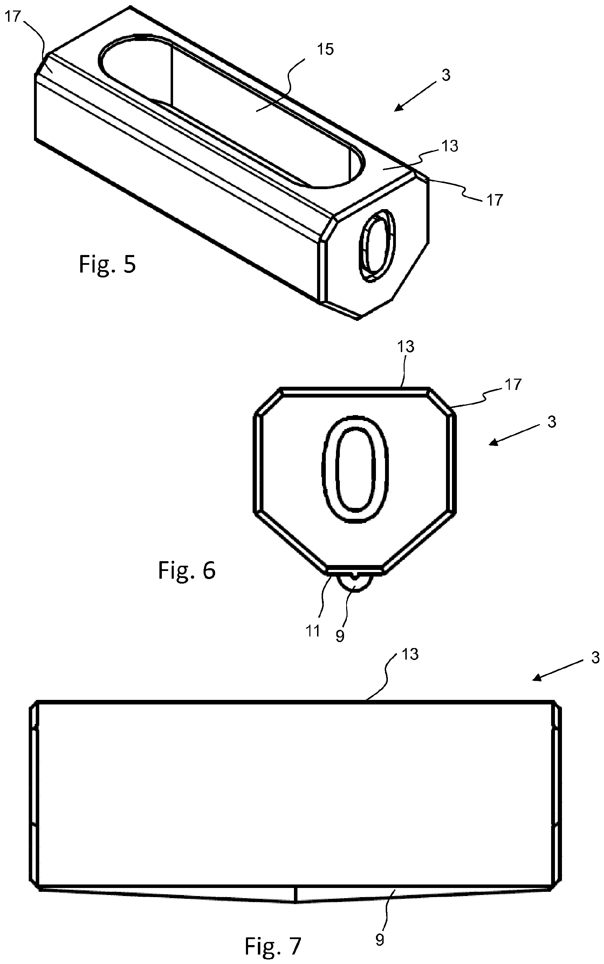

Fig. 5 zeigt eine perspektivische Ansicht eines Halteteils 3 gemäß der vorliegenden Erfindung. Hier ist nun die langlochartige Ausnehmung 15 auf der Oberseite 13 des Halteteils 3 deutlich sichtbar. Ebenso erkennt man die abgeschrägten Übergänge bzw. oberen Kanten 17, die den Übergang zwischen der Oberseite 13 und den Längsflächen des Halteteils 3 bilden.
Fig. 6 zeigt eine Seitenansicht des Halteteils 3 aus Fig. 5 von vorne. Die Darstellung ist im Wesentlichen identisch mit der in Fig. 2 rechts dargestellten Ausführungsform des Kalibriereinsatzes 1, wobei hier das Formgebungsteil 5 nicht in die Ausnehmung 15 des Halteteils 3 eingesetzt ist. Auf eine Wiederholung der Beschreibung wird deshalb an dieser Stelle verzichtet.
Fig. 7 zeigt eine Seiteneinsicht der Länge nach des in den Fig. 5 und 6 abgebildeten Halteteils 3. Auch hier ist deutlich die auf der Unterseite 11 des Halteteils 11 ausgebildeten Nocke 9 sichtbar, deren Dicke von der Mitte zu den Längsseiten des Halteteils 3 hin linear abnimmt.

Fig. 8 zeigt eine perspektivische Ansicht eines Formgebungsteils 5 gemäß der vorliegenden Erfindung. Das Formgebungsteil 5 weist ein Verbindungsende bzw. einen Fußabschnitt 8 und ein freies Ende 7 auf, wobei das Verbindungsende 8 derart ausgebildet ist, dass es formschlüssig in die Ausnehmung 15 auf der Oberseite 13 des Halteteils 3 hinein passt. Die Form des freien Endes 7 des Formgebungsteils 5 ist im Prinzip je nach gewünschtem Kalibrierergebnis frei wählbar. Das Material des Formgebungsteils 5 ist Hartmetall, wobei als Herstellungsverfahren Drahterosions- oder entsprechende Gieß- oder Sinterverfahren zum Einsatz kommen können. Es versteht sich, dass das freie Ende 7 des Formgebungsteils 5, wie in der linken Darstellung aus Fig. 2 entnommen werden kann, eine andere Form aufweisen kann als in Fig. 8 dargestellt.

Fig. 9 zeigt eine schematische Querschnittsansicht von zwei in eine Kalibrierblende eingesetzten erfindungsgemäßen Kalibriereinsätzen zusammen mit einem Extrudat bzw. extrudierten Profil 19. Die Kalibrierblende 21 weist an ihrer Oberseite entsprechende Ausnehmungen bzw. Nuten auf, in die die beiden Kalibriereinsätze 1 eingesetzt sind. Die Form der Kalibriereinsätze 1 entspricht im Wesentlichen der der in Fig. 1 dargestellten: Der links dargestellte Kalibriereinsatz 1 weist ein Formgebungsteil 5 auf, dessen freies Ende 7 oben im Winkel von etwa 45° abgeschrägt ist, so dass aufgrund des ebenso schrägen Einsetzwinkels des gesamten Kalibriereinsatzes 1 innerhalb der Kalibrierblende 21 die obere Kontaktfläche zum extrudierten Profil bzw. Extrudat 19 im Wesentlichen waagerecht ist. Rechts neben dem schräg angeordneten Kalibrieransatz 1 ist ein weiterer Kalibriereinsatz 1 angeordnet, der im Wesentlichen in einer senkrechten Konfiguration mit einem geraden Formgebungsteil 5 ausgebildet ist. Durch die Abschrägungen bzw. die Dimensionen der Halteteile 3 und der Formgebungsteile 5 ist es möglich, dass die beiden Formgebungsteile 5 der beiden Kalibriereinsätze 1 bis auf einen geringen Abstand eng aneinander heranrücken können und damit ihre Funktion bei der Kalibrierung des damit in Kontakt stehenden Vorsprungs des extrudierten Profils 19 erfüllen können. Damit wird ein Aspekt der vorliegenden Erfindung deutlich, nämlich dass aufgrund der Modularität Platz eingespart und die Vielseitigkeit erhöht werden kann.

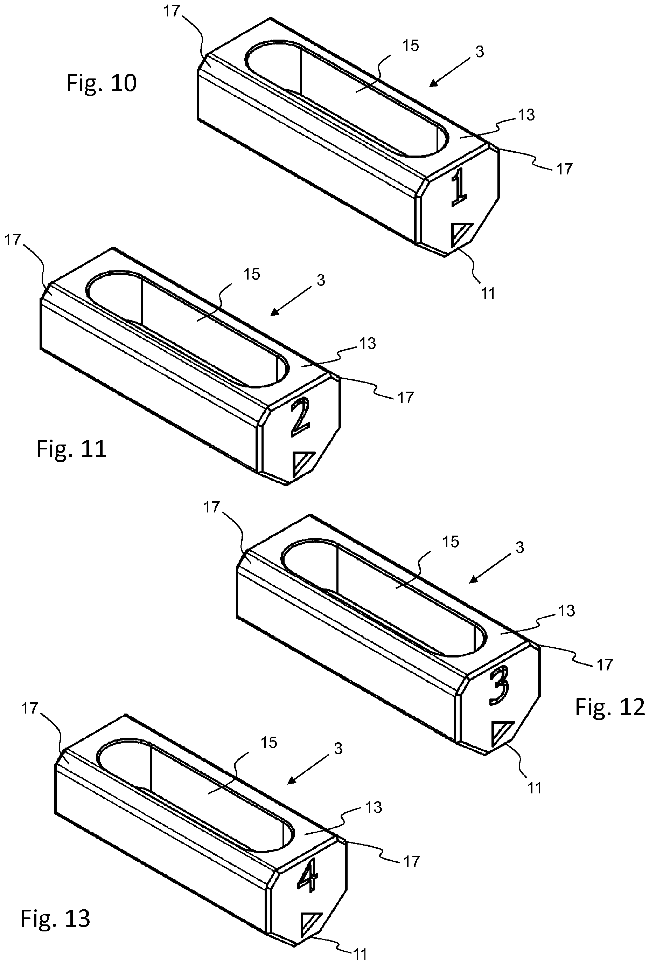

In den Fig. 10 bis 13 sind unterschiedliche Ausbildungen des Halteteils des erfindungsgemäßen Kalibriereinsatzes 1 dargestellt, um einen weiteren Aspekt der Erfindung zu erläutern. Das wesentliche Merkmal, das die Ausführungsformen der Fig. 10 bis 13 unterscheidet, ist die Anordnung der Ausnehmung 15 auf der Oberseite 13 des Halteteils 3. Im Vergleich zum Halteteil 3, das in Fig. 5 dargestellt ist, ist die Ausnehmung 15 des Halteteils 3 der Fig. 10 leicht bzgl. der senkrecht in Längsrichtung verlaufenden Ebene versetzt, in Fig. 10 leicht nach links. Die Abmessungen der Ausnehmung 15 selbst sind bei allen Ausbildungen identisch. Dies bedeutet, dass ein eingesetztes Formgebungsteil 5 ebenfalls um einen vorbestimmten Abstand bzgl. der genannten Mittelebene versetzt angeordnet werden kann. Das Maß des Versatzes ist beispielsweise durch die Ziffer 1 auf der sichtbaren Stirnseite des Halteteils 3 gekennzeichnet. Ebenfalls gibt ein auf der Stirnseite angeordneter Pfeil die Richtung des Versatzes an. Man erkennt aus den Fig. 11 bis 13, dass der erwähnte Versatz der Ausnehmung 15 bezogen auf die Mittelebene in Längsrichtung jeweils etwas größer wird: In der in Fig. 13 dargestellten und mit der Ziffer 4 gekennzeichneten Ausführungsform des Halteteils 3 ist der Versatz dementsprechend am größten. Betrachtet man die Tatsache, dass die Halteteile auch in umgekehrter Richtung eingesetzt werden können, versteht es sich, dass dadurch ein entsprechender Versatz der Ausnehmung 15 zur anderen Seite als oben erwähnt erzielt werden kann.

Damit ergeben sich durch die fünf hier dargestellten Ausführungsformen des Halteteils 3 (Fig. 5 bzw. Fig. 10 bis 13) neuen mögliche unterschiedliche Anordnungen für den Kalibriereinsatz, wobei dasselbe Formgebungsteil (s. Fig. 8) verwendet werden kann. Dem Fachmann wird dadurch deutlich, welche deutlich erhöhten Möglichkeiten er durch die Modularität des erfindungsgemäßen Kalibriereinsatzes zur Verfügung hat.

Mit dem erfindungsgemäßen Gegenstand wird ein Kalibriereinsatz für eine Kalibrierblende bereitgestellt, der kostengünstig hergestellt werden kann, eine einfache und Platz sparende Konstruktion aufweist sowie die Standzeiten für den Werkzeug- oder Kalibriereinsatzwechsel der gesamten Extrusionsanlage minimiert.

## Patentansprüche

1. Kalibriereinsatz (1) für eine Kalibrierblende (21) für ein Kalibrierwerkzeug zur Herstellung von Extrusionsprofilen (19),
wobei der Kalibriereinsatz (1) dazu vorgesehen ist, in einer Nut der Kalibrierblende (21) aufgenommen und formschlüssig gehalten zu werden,
wobei der Kalibriereinsatz (1) derart zweiteilig ausgebildet ist, dass er ein Halteteil (3) und ein von dem Halteteil (3) getrennt hergestelltes Formgebungsteil (5) umfasst, **dadurch gekennzeichnet, dass**
das Halteteil (3) auf seiner Oberseite (13) eine Ausnehmung (15) aufweist, in der ein Fußabschnitt des Formgebungsteils (5) lösbar aufgenommen ist.

2. Kalibriereinsatz (1) nach Anspruch 1, **dadurch gekennzeichnet, dass** das Halteteil (3) ein erstes Material und das Formgebungsteil (5) ein von dem ersten Material verschiedenes zweites Material aufweist.

3. Kalibriereinsatz (1) nach einem der vorhergehenden Ansprüche, **dadurch gekennzeichnet, dass** das Halteteil (3) vollständig aus Kunststoff und das Formgebungsteil (5) vollständig aus Metall ausgebildet ist.

4. Kalibriereinsatz (1) nach einem der vorhergehenden Ansprüche, **dadurch gekennzeichnet, dass** Halteteil (3) und Formgebungsteil (5) formschlüssig miteinander in Eingriff stehen.

5. Kalibriereinsatz (1) nach Anspruch 1, **dadurch gekennzeichnet, dass** die Ausnehmung (15) langlochartig ausgebildet ist.

6. Kalibriereinsatz (1) nach Anspruch 1 oder 5, **dadurch gekennzeichnet, dass** die Ausnehmung (15) gegenüber der Mittelposition quer zur Längsachse des Halteteils (3) versetzt angeordnet ist.

7. Kalibriereinsatz (1) nach einem der vorhergehenden Ansprüche, **dadurch gekennzeichnet, dass** das Halteteil (3) auf seiner Unterseite (11) eine ebene Fläche sowie seitlich von der ebenen Fläche in Längsrichtung jeweils eine abgeschrägte Fläche (17) aufweist.

8. Kalibriereinsatz (1) nach einem der vorhergehenden Ansprüche, **dadurch gekennzeichnet, dass** das Halteteil (3) bezüglich seiner Mittenebene, die zur Ebene der Kalibrierblende (21) parallel ist, symmetrisch ausgebildet ist.

9. Kalibriereinsatz (1) nach einem der vorhergehenden Ansprüche, **dadurch gekennzeichnet, dass** auf der Unterseite (11) des Halteteils (3) eine Nocke (9) ausgebildet ist, deren Dicke von der Mitte zu den Längsseiten des Halteteils (3) hin linear abnimmt.

10. Kalibriereinsatz (1) nach Anspruch 9, **dadurch gekennzeichnet, dass** die Querschnittsfläche der Nocke (9) die Form eines Halbkreises, einer Halbellipse, eines Dreiecks, eines Halbpolygons oder eines Rechtecks aufweist.

11. Kalibriereinsatz (1) nach einem der vorhergehenden Ansprüche, **dadurch gekennzeichnet, dass** das Formgebungsteil (5) ein Verbindungsende (8) und ein freies Ende (7) aufweist, wobei das Verbindungsende (8) formschlüssig mit der Ausnehmung (15) auf der Oberseite (13) des Halteteils (3) verbunden ist.

12. Kalibriereinsatz (1) nach Anspruch 11, **dadurch gekennzeichnet, dass** das freie Ende (7) des Formgebungsteils (5) eine schräge Fläche aufweist, die zwischen 30° und 60°, bevorzugt um 45° bezüglich der ebenen Oberseite (13) des Halteteils (3) geneigt ist.

## Claims

1. Calibrator insert (1) for a calibrating die (21) for a calibrating tool for the production of extrusion profiles (19), wherein the calibrator insert (1) is provided to be received in a groove of the calibrating die (21) and held therein with form-fitting engagement, wherein the calibrator insert (1) is designed in two parts in such a way that it comprises a holding part (3) and a shaping part (5) made separately from the holding part (3), **characterised in that** the holding part (3) has on its upper side (13) a recess (15) in which a foot section of the shaping part (5) is releasably accommodated.

2. Calibrator insert (1) according to claim 1 **characterised in that** the holding part (3) comprises a first material and the shaping part comprises a second material which is different from the first material.

3. Calibrator insert (1) according to one of the preceding claims **characterised in that** the holding part (3) is made entirely of plastic and the shaping part (5) is made entirely of metal.

4. Calibrator insert (1) according to one of the preceding claims **characterised in that** the holding part (3) and the shaping part (5) engage in form-fitting manner with each other.

5. Calibrator insert (1) according to claim 1 **characterised in that** the recess (15) is designed in the form of an elongated hole.

6. Calibrator insert (1) according to claim 1 or 5 **characterised in that** the recess (15) is arranged with regard to the centre position off-set transversely to the longitudinal axis of the holding part (3).

7. Calibrator insert (1) according to one of the preceding claims **characterised in that** the holding part (3) has on its underneath (11) a level surface as well as an inclined surface (17) on each side of the level surface in the longitudinal direction.

8. Calibrator insert (1) according to one of the preceding claims **characterised in that** the holding part (3) is formed symmetrical relative to its centre plane which is parallel to the plane of the calibrating die (21).

9. Calibrator insert (1) according to one of the preceding claims **characterised in that** a cam (9) is formed on the underneath (11) of the holding part (3) wherein the thickness of the cam decreases linearly from the centre to the longitudinal sides of the holding part (3).

10. Calibrator insert (1) according to claim 9 **characterised in that** the cross-sectional surface of the cam (9) has the shape of a semi-circle, a semi-ellipse, a triangle, a half polygon or a rectangle.

11. Calibrator insert (10 according to one of the preceding claims **characterised in that** the shaping part (5) has a connecting end (8) and a free end (7) wherein the connecting end (8) is connected in form-fitting manner with the recess (15) on the upper side (13) of the holding part (3).

12. Calibrator insert (1) according to claim 11 **characterised in that** the free end (7) of the shaping part (5) has an inclined surface which is inclined between 30° and 60°, preferably by 45°, in relation to the level upper side (13) of the holding part (3).

## Revendications

1. Insert de calibrage (1) pour un dispositif de calibrage (21) qui sert à un outil de calibrage destiné à la fabrication de profilés extrudés (19),
l'insert de calibrage (1) étant conçu pour être logé et retenu par coopération de formes dans une rainure du dispositif de calibrage (21),
l'insert de calibrage (1) étant conçu en deux parties de manière à comporter une partie de retenue (3) et une partie de mise en forme (5) fabriquée séparément de la partie de retenue (3),
**caractérisé en ce que**
la partie de retenue (3) présente sur sa face supérieure (13) un évidement (15) dans lequel une section pied de la partie de mise en forme (5) est logée de manière détachable.

2. Insert de calibrage (1) selon la revendication 1, **caractérisé en ce que** la partie de retenue (3) présente un premier matériau et la partie de mise en forme (5) présente un deuxième matériau différent du premier matériau.

3. Insert de calibrage (1) selon l'une quelconque des revendications précédentes, **caractérisé en ce que** la partie de retenue (3) est formée entièrement de matière plastique et la partie de mise en forme (5) est formée entièrement de métal.

4. Insert de calibrage (1) selon l'une quelconque des revendications précédentes, **caractérisé en ce que** la partie de retenue (3) et la partie de mise en forme (5) sont en contact l'une avec l'autre par coopération de formes.

5. Insert de calibrage (1) selon la revendication 1,
**caractérisé en ce que** l'évidement (15) présente la forme d'un trou oblong.

6. Insert de calibrage (1) selon la revendication 1 ou 5,
**caractérisé en ce que** l'évidement (15) est ménagé de manière décalée par rapport à la position centrale transversalement à l'axe longitudinal de la partie de retenue (3).

7. Insert de calibrage (1) selon l'une quelconque des revendications précédentes, **caractérisé en ce que** la partie de retenue (3) présente sur sa face inférieure (11) une surface plate ainsi que, à côté de la surface plate dans la direction longitudinale, respectivement une surface chanfreinée (17).

8. Insert de calibrage (1) selon l'une quelconque des revendications précédentes, **caractérisé en ce que** la partie de retenue (3) est formée de manière symétrique par rapport à son plan central, qui est parallèle au plan du dispositif de calibrage (21).

9. Insert de calibrage (1) selon l'une quelconque des revendications précédentes, **caractérisé en ce qu'**une came (9), dont l'épaisseur diminue linéairement du centre aux côtés longs de la partie de retenue (3), est formée sur la face inférieure (11) de la partie de retenue (3).

10. Insert de calibrage (1) selon la revendication 9, **caractérisé en ce que** la section transversale de la came (9) présente la forme d'un demi-cercle, d'une demi-ellipse, d'un triangle, d'un demi-polygone ou d'un rectangle.

11. Insert de calibrage (1) selon l'une quelconque des revendications précédentes, **caractérisé en ce que** la partie de mise en forme (5) présente une extrémité de liaison (8) et une extrémité libre (7), l'extrémité de liaison (8) étant reliée par coopération de formes à l'évidement (15) sur la face supérieure (13) de la partie de retenue (3).

12. Insert de calibrage (1) selon la revendication 11, **caractérisé en ce que** l'extrémité libre (7) de la partie de mise en forme (5) présente une surface oblique, qui est inclinée d'une valeur comprise entre 30° et 60°, de préférence de 45°, par rapport à la face supérieure (13) plate de la partie de retenue (13).
